# DEMANDE DE BREVET EUROPEEN

(11) **EP 4 635 668 A1**
(43) Date de publication de la demande: **22.10.2025**
(21) Numéro de dépôt: 25166741.6
(22) Date de dépôt: 27.03.2025
(51) Int. Cl.: B23K 11/30, B23K 11/31, B23K 11/36, B23K 101/00

(54) **PINCE DE SOUDURE PAR POINT COMPRENANT UN ÉLÉMENT RIGIDE DE RACCORD FLUIDIQUE**

(30) Priorité: 18.04.2024 FR 2404027
(71) Demandeur: GYS, 53940 Saint-Berthevin Cedex (FR)
(72) Inventeur: BOUYGUES, Bruno, 75016 Paris (FR); FRISON, Arnaud, 53100 Chatillon sur Colmont (FR); GABILLARD, Mickael, 53970 Montigné le Brillant (FR)
(74) Mandataire: Vidon Brevets & Stratégie

(57) **Abrégé**

L'invention concerne une pince de soudure (1) par point comprenant un bras de soudure inférieur (12) portant un premier support d'électrode (121) et une première électrode (122), et un bras de soudure supérieur (11) portant un deuxième support d'électrode (111) et une deuxième électrode (112) pour effectuer un point de soudure entre une première pièce de tôle et une deuxième pièce de tôle par mise en contact de la première électrode (122) avec la première pièce de tôle et de la deuxième électrode (112) avec la deuxième pièce de tôle, le deuxième support d'électrode (111) comprenant un chemin de passage interne d'un fluide caloporteur destiné à évacuer l'énergie thermique qui s'accumule dans la deuxième électrode (112) durant les phases de soudure, le bras de soudure supérieur (11) comprenant un conduit interne d'amenée (111A) de fluide caloporteur vers le chemin de passage interne de fluide du deuxième support d'électrode (111) et un conduit d'évacuation (112A) de fluide caloporteur provenant dudit chemin de passage interne de fluide caloporteur, le deuxième support d'électrode (111) étant monté de façon réglable sur le bras de soudure supérieur (11), et en ce qu'elle comprend un élément de raccord fluidique (13) rigide solidaire du bras de soudure supérieur (11).

## Description

### Domaine technique de l'invention

La présente invention se rapporte aux appareils de soudure pour l'assemblage de deux pièces par points de soudure.

L'invention concerne une pince de soudure par points, utile notamment dans le domaine de l'industrie et en particulier, mais non exclusivement, dans le domaine de l'industrie automobile pour souder des éléments de carrosserie de véhicules automobiles.

L'invention concerne plus particulièrement une technique de refroidissement d'une pince de soudage utilisée notamment, mais non exclusivement, dans le domaine de l'industrie automobile pour souder des pièces de tôle métallique entre elles.

### État de la technique

Les pinces de soudure pour l'assemblage de deux pièces par points de soudure, tels que des éléments de carrosserie en tôle de véhicules automobiles, sont connues.

Pour assembler ces tôles ensemble, celles-ci sont positionnées entre deux électrodes qui sont alternativement rapprochées et écartées pour réaliser des points de soudure en différents endroits de la carrosserie.

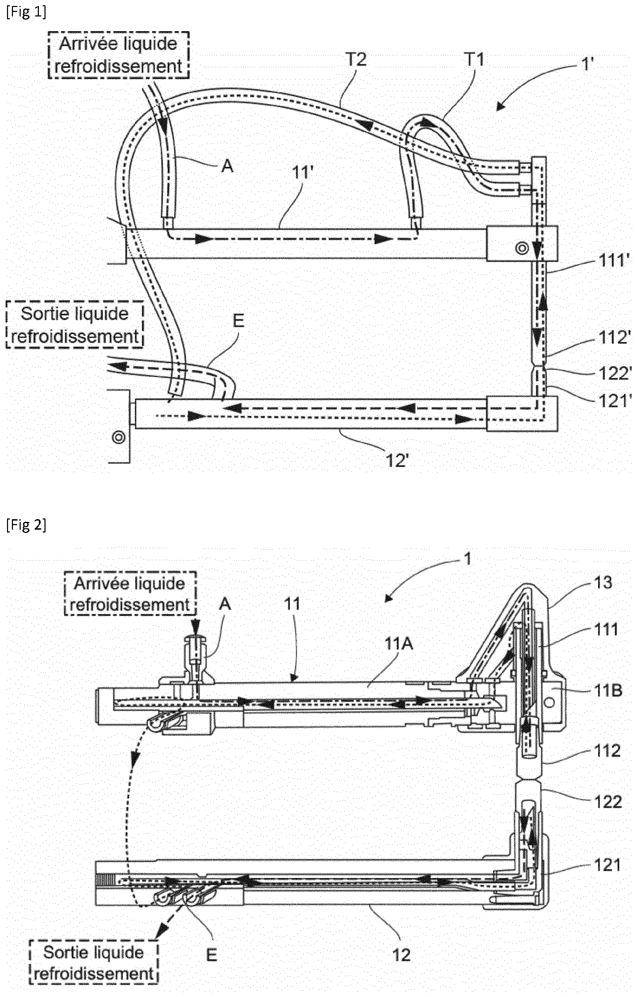

Comme illustré sur la figure 1, une telle pince de soudure par point comprend un bras inférieur portant une première électrode, et un bras supérieur portant une deuxième électrode disposée en vis-à-vis de la première électrode, pour effectuer un point de soudure entre une première pièce de tôle superposée à une deuxième pièce de tôle par mise en contact de la première électrode avec la première pièce de tôle et de la deuxième électrode avec la deuxième pièce de tôle.

Lorsque les électrodes sont en contact avec les tôles, un courant est généré par la source de courant pendant un court instant et circule entre les électrodes traversant ainsi l'assemblage des tôles.

En passant dans l'assemblage des tôles, le courant amène le métal en fusion au niveau du contact entre les deux tôles.

Sous l'effet de l'effort de pincement, le métal fondu provenant des deux tôles se mélange pour ne former qu'une seule zone fondue. Dès que le courant est interrompu, la zone fondue se refroidit et se solidifie pour constituer un point de liaison entre les deux tôles.

Cette opération entraîne l'accumulation d'énergie thermique dans les électrodes de sorte qu'il est nécessaire de les refroidir pour éviter qu'elles ne se dégradent trop rapidement.

La figure 1 illustre partiellement une pince de soudure 1' comprenant à une de ses extrémités (à droite ici), au niveau du bras de soudure supérieur 11', un porte-électrode 111' et une électrode 112'.

Le porte-électrode 111' est réglable en hauteur (c'est-à-dire verticalement) par rapport au bras de soudure supérieur 11'par le biais d'un dispositif de serrage, ce qui permet de faire varier la hauteur de l'électrode 112' et la distance entre les première et deuxième électrodes.

L'électrode 112' est refroidie au moyen d'un liquide de refroidissement, tel que de l'eau. Le cheminement du liquide de refroidissement est représenté schématiquement par des flèches sur la figure 1.

On constate ainsi que le liquide de refroidissement est amené depuis une conduite d'alimentation A dite amont dans un conduit/canalisation interne du bras de soudure supérieur 11' par le biais d'un raccord. Le liquide de refroidissement sort ensuite du conduit interne du bras de soudure supérieur 11' par un autre raccord relié à une première extrémité d'un tuyau souple/flexible T1, l'autre extrémité de ce tuyau souple/flexible T1 étant reliée par le biais encore d'un autre raccord situé sur la partie supérieure au porte-électrode, ou support d'électrode, 111'. Le liquide de refroidissement, caloporteur, circule dans un circuit fluidique au sein du porte-électrode 111' selon une première direction jusqu'à l'électrode située en partie inférieure du porte-électrode 111'. En s'écoulant contre la portion haute de l'électrode 112', le liquide de refroidissement évacue l'énergie thermique qui s'accumule dans l'électrode 112' durant les phases de soudure.

Le liquide de refroidissement est dirigé ensuite selon une deuxième direction, opposée à la première direction, vers la partie supérieure du porte-électrode 111'. Par le biais d'un raccord, le liquide de refroidissement est dirigé dans un autre tuyau souple/flexible T2 relié au circuit interne de refroidissement de l'électrode 122' du bras de soudure inférieur 12' portée par un porte-électrode 121', lui-même relié à une conduite d'évacuation E.

La mise en œuvre de tuyaux flexibles est avantageuse en ce sens qu'elle permet de compenser les variations de hauteur du porte-électrode 111' par rapport au bras de soudure 11'.

Cette approche est toutefois encombrante.

De surcroit, les bords de tôles à souder peuvent accidentellement venir au contact de ces flexibles lors des manipulations et éventuellement les couper.

Il est important pour le Demandeur d'offrir un dispositif de soudure présentant des performances encore améliorées par rapport au dispositif de soudure de l'art antérieur susmentionné, tout en étant simple, commode et économique tant dans sa fabrication que dans son utilisation.

### Exposé de l'invention

L'invention répond à ce besoin en proposant une pince de soudure par point comprenant un bras de soudure inférieur portant un premier support d'électrode et une première électrode, et un bras de soudure supérieur portant un deuxième support d'électrode et une deuxième électrode pour effectuer un point de soudure entre une première pièce de tôle et une deuxième pièce de tôle par mise en contact de la première électrode avec la première pièce de tôle et de la deuxième électrode avec la deuxième pièce de tôle, le deuxième support d'électrode comprenant un chemin de passage interne de fluide caloporteur destiné à évacuer l'énergie thermique qui s'accumule dans la deuxième électrode durant les phases de soudure, le bras de soudure supérieur comprenant un conduit interne d'amenée de fluide caloporteur vers le chemin de passage interne de fluide du deuxième support d'électrode et un conduit d'évacuation de fluide caloporteur provenant dudit chemin de passage interne de fluide.

Selon l'invention, le deuxième support d'électrode est monté de façon réglable en hauteur sur le bras de soudure supérieur de sorte à pouvoir régler la distance entre les deux électrodes, la pince de soudure comprenant un élément de raccord fluidique rigide solidaire du bras de soudure supérieur, ledit élément de raccord comprenant un corps dans lequel sont ménagées deux canalisations de raccordement fluidique, dites d'entrée et de sortie, configurées pour raccorder le chemin de passage interne de fluide caloporteur dudit deuxième support d'électrode aux conduits d'amenée et d'évacuation de fluide caloporteur respectivement du bras de soudure supérieur quelle que soit la position du deuxième support d'électrode par rapport au bras de soudure supérieur.

Grâce à l'élément de raccord selon l'invention, le raccordement fluidique du bras au support d'électrode est simplifié et sécurisé.

De surcroit, le réglage en hauteur du deuxième support d'électrode par rapport au bras supérieur se fait d'une manière sécurisée, rapide et très aisée.

D'autres caractéristiques particulièrement simples et commodes de la pince selon l'invention sont décrites ci-après.

Le corps de l'élément de raccord fluidique comprend un logement de réception dudit deuxième support d'électrode, ledit chemin de passage interne de fluide dudit deuxième support d'électrode étant en communication fluidique avec ledit logement de réception, la canalisation de raccordement fluidique dite d'entrée étant en communication fluidique avec le chemin de passage interne de fluide dudit deuxième support d'électrode pour amener le fluide caloporteur vers la deuxième électrode et la canalisation de raccordement fluidique dite de sortie débouchant dans ledit logement de réception pour évacuer le fluide caloporteur provenant du chemin de passage interne de fluide dudit deuxième support d'électrode.

Le deuxième support d'électrode comprend une cavité interne obturée à une première extrémité par ladite deuxième électrode et ouverte à sa deuxième extrémité, la canalisation de raccordement dite d'entrée étant relié à un tuyau d'amenée de fluide caloporteur qui s'étend en partie dans la cavité interne par la deuxième extrémité ouverte et y débouche pour amener le fluide caloporteur vers la deuxième électrode.

Le tuyau est dimensionné pour que le fluide caloporteur issu du tuyau et déversé dans cavité interne transite ensuite dans l'espace défini entre la paroi intérieure de la cavité interne et la paroi extérieure du tuyau vers ledit logement de réception.

Le corps de l'élément de raccord fluidique comprend un trou de réception de l'extrémité du bras supérieur s'étendant perpendiculairement audit logement de réception dudit deuxième support d'électrode.

Les conduits d'amenée et d'évacuation de fluide caloporteur du bras supérieur sont mis en communication avec les deux canalisations de raccordement fluidique, dites d'entrée et de sortie, de l'élément de raccord fluidique au sein du trou de réception.

Le bras supérieur comprend deux mâchoires de serrage du deuxième support d'électrode sur le bras supérieur et des moyens de réglage des mâchoires entre une position écartée autorisant le positionnement du deuxième support d'électrode par rapport au bras de soudure supérieur et une position rapprochée bloquant en position le deuxième support d'électrode par rapport au bras de soudure supérieur.

Les moyens de réglage comprennent une vis de réglage coopérant avec les deux mâchoires de sorte à rapprocher ou écarter ces deux mâchoires l'une de l'autre.

Le corps de l'élément de raccord fluidique est en matière plastique.

L'invention concerne également un élément de raccord fluidique rigide destiné à être monté sur le bras de soudure supérieur d'une pince de soudure tel que décrit précédemment, ledit élément de raccord comprenant un corps dans lequel sont ménagées deux canalisations de raccordement fluidique, dites d'entrée et de sortie, configurées pour raccorder le chemin de passage interne de fluide caloporteur d'un deuxième support d'électrode du bras de soudure supérieur aux conduits d'amenée et d'évacuation de fluide caloporteur respectivement du bras de soudure supérieur quelle que soit la position du deuxième support d'électrode par rapport au bras de soudure supérieur.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] est une vue partielle d'une pince de soudure par point de l'art antérieur ;
[Fig 2] est une vue en coupe d'une pince de soudure selon un mode de réalisation de l'invention ;
[Fig 3] est une vue de détail, en coupe, de l'extrémité du bras supérieur de la pince de soudure de la [Fig 2] ;
[Fig 4] est une vue en perspective de l'extrémité du bras supérieur de la pince de soudure de la [Fig 2] montrant l'élément de raccord ;
[Fig 5] est une vue en coupe d'un élément de raccord fluidique rigide adapté pour être mis en œuvre dans une pince de soudure conforme à l'invention ;
[Fig 6A] et [Fig 6B] illustrent deux positions possibles du porte-électrode et de son électrode sur le bras supérieur;
[Fig 7] est une autre vue de détail, en coupe, de l'extrémité du bras supérieur de la pince de soudure de la [Fig 2] montrant les moyens de réglage du porte-électrode et de son électrode sur le bras supérieur;
[Fig 8] est une vue en perspective de l'extrémité du bras supérieur de la pince de soudure de la [Fig 2] montrant l'élément de raccord de l'invention en transparence.

### Description détaillée d'un mode de réalisation de l'invention

La figure 2 est une vue partielle, en coupe, d'une pince de soudure 1 par points selon un mode de réalisation de l'invention.

La pince de soudure 1 comprend un bras de soudure inférieur 12 portant une première électrode 122, et un bras de soudure supérieur 11 portant une deuxième électrode 112 pour effectuer un point de soudure entre une première pièce de tôle et une deuxième pièce de tôle (non représentées) par mise en contact de la face active de la première électrode 122 avec la première pièce de tôle et de la face active de la deuxième électrode 112 avec la deuxième pièce de tôle.

Plus précisément, le bras de soudure supérieur 11 est muni à son extrémité d'un porte-électrode 111 qui s'étend perpendiculairement au bras de soudure supérieur 11. Le porte-électrode 111 est monté mobile par rapport au bras de soudure supérieur 11 en ce sens que sa hauteur ou position dans la direction verticale, et donc la distance entre les deux électrodes, peut être réglée/ajustée par un mécanisme de réglage décrit par la suite.

Le bras de soudure inférieur 12 est muni à son extrémité d'un porte-électrode 121 qui s'étend perpendiculairement au bras de soudure inférieur 12.

Les bras de soudure, porte-électrodes et électrodes sont cylindriques dans cet exemple de réalisation.

On réalise une soudure en superposant les tôles, la pince de soudure 1 venant serrer l'assemblage de tôles par l'intermédiaire des bras de soudure 11, 12 et des électrodes 112, 122.

Chaque électrode 112, 122 est montée de façon amovible dans un porte-électrode 111, 121 respectivement de sorte que les électrodes 112, 122 sont disposées en vis-à-vis l'une de l'autre.

Les électrodes 112, 122 viennent enserrer au moins deux portions de pièces à souder ensemble et sont alimentées en courant électrique de forte puissance, de façon à provoquer la fusion partielle des deux pièces et les souder entre elles.

Comme expliqué précédemment, cette opération entraîne l'accumulation d'énergie thermique dans les électrodes 112, 122 de sorte qu'il est nécessaire de les refroidir pour éviter qu'elles ne se dégradent trop rapidement.

Dans ce but, la pince de soudure 1 comprend un circuit de refroidissement des électrodes 112, 122 dans lequel un fluide de refroidissement, caloporteur, circule en circuit fermé.

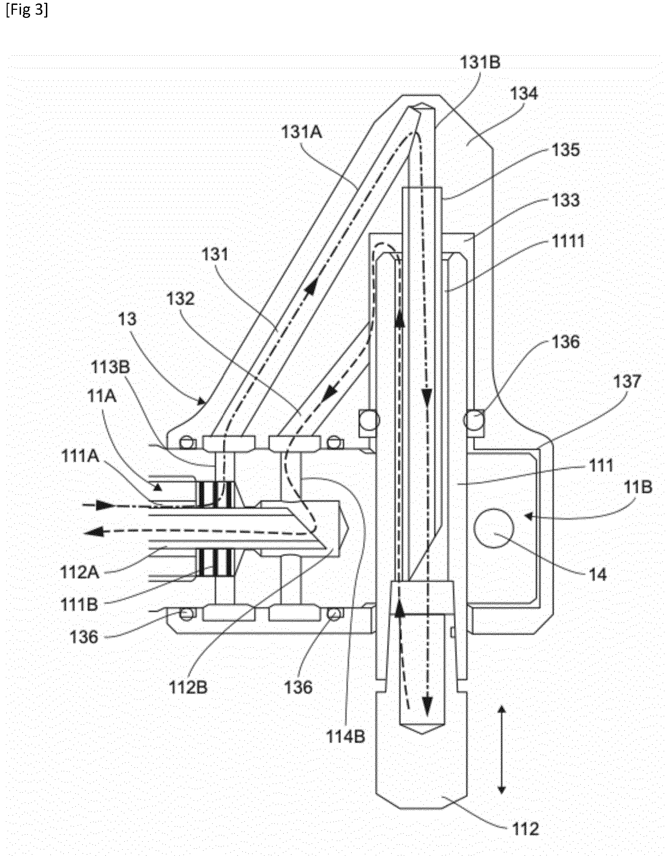

Sur les figures 2 et 3, le trajet du liquide caloporteur dans le circuit de refroidissement de la pince de soudure 1 est illustré schématiquement par des flèches. L'arrivée et la sortie du liquide de refroidissement dans et hors du circuit respectivement sont également représentées.

Le circuit de refroidissement s'étend tout d'abord dans le bras de soudure supérieur 11 (où est située l'entrée du liquide de refroidissement) puis dans le porte-électrode 111 pour refroidir l'électrode 112 portée par le porte-électrode 111. Ceci sera décrit plus en détails par la suite également.

Dans l'exemple de réalisation décrit, le circuit de refroidissement est destiné ensuite à refroidir l'électrode 122 du bras de soudure inférieur 12. Depuis le bras de soudure supérieur 11, le circuit de refroidissement s'étend ensuite dans le bras de soudure inférieur 12 puis dans le porte-électrode 121 et y forme une boucle débouchant au niveau de la sortie du liquide de refroidissement.

On décrit ci-après la structure du bras de soudure supérieur 11 selon un exemple de réalisation.

Dans l'exemple illustré, le bras de soudure supérieur 11 est constitué d'une première partie 11A sur laquelle est emmanchée une deuxième partie ou embout 11B.

La première partie 11A est raccordée au niveau d'une de ses extrémités à une conduite d'alimentation A en fluide caloporteur. L'extrémité opposée de la première partie 11A est solidaire de l'embout 11B.

Cet embout 11B présente un orifice traversant 111C s'étendant perpendiculairement à son axe longitudinal et à l'axe longitudinal du bras de soudure supérieur 11 lorsque l'embout 11B est monté sur la première partie 11A.

Le porte-électrode 111 est monté coulissant dans cet orifice traversant 111C de sorte que sa position par rapport à l'embout 11B et le bras de soudure supérieur 11 puisse être ajustée. Un mécanisme décrit ci-après permet de régler la hauteur du porte-électrode 111, c'est-à-dire la distance de l'électrode 112 par rapport à l'autre électrode 122, selon l'épaisseur des tôles à souder par exemple, et de maintenir fixe le porte-électrode 111 dans la position désirée.

Le porte-électrode 111 est de forme cylindrique et présente un trou traversant selon son axe longitudinal. Ce trou présente à une première extrémité une ouverture située au niveau du point de fixation de l'électrode 112, cette ouverture étant obturée lorsque l'électrode 112 est montée sur le porte-électrode 111. La deuxième extrémité du trou est ouverte. Le trou ainsi obturé délimite une cavité interne 1111 dans laquelle est défini un chemin de passage du fluide caloporteur au sein du porte-électrode 111 pour refroidir l'électrode 112. L'électrode 112 est ainsi solidarisée à la première extrémité inférieure du porte-électrode 111 par sa face arrière (la face avant de l'électrode 112 étant celle destinée à venir au contact d'une tôle) et présente au niveau de cette face arrière une cavité intérieure qui prolonge le trou du porte-électrode 111 de sorte à former le fond de la cavité interne 1111. Un élément de raccord fluidique 13 rigide permet le raccordement de la chambre de passage 1111 interne de fluide caloporteur du porte-électrode 111 au reste du circuit de refroidissement de la pince de soudure 1, en particulier les portions du circuit de refroidissement situées dans le bras de soudure supérieur 11.

L'élément de raccord fluidique 13 est, dans cet exemple de réalisation, de forme globalement triangulaire.

Cet élément de raccord fluidique 13 est dans un exemple de réalisation en matière plastique.

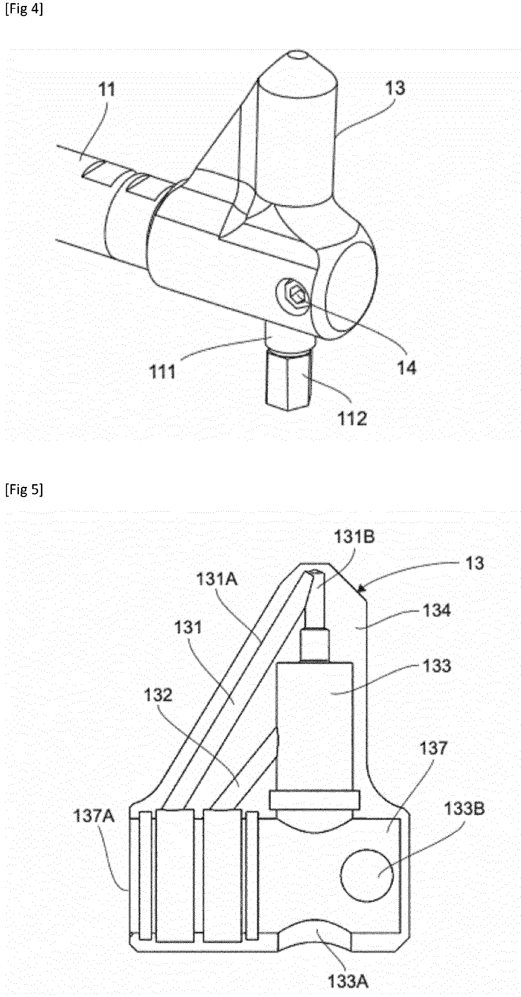

Il est représenté seul, en coupe, sur la figure 5.

Il comprend un corps 134 dans lequel est ménagé un trou de réception 137 de l'embout 11B présentant une extrémité ouverte 137A par laquelle vient se loger de façon étanche l'embout 11B du bras de soudure supérieur 11. Autrement dit, l'élément de raccord fluidique 13 vient s'emmancher à l'extrémité du bras supérieur 11 autour de l'embout 11B. Le corps 134 de l'élément de raccord 13 comprend en outre un logement de réception 133 du porte-électrode 111 dont l'axe longitudinal s'étend perpendiculairement à celui du trou de réception 137 et qui présente une extrémité ouverte 133A. L'extrémité du porte-électrode 111 destinée à porter l'électrode 112 et située du côté de l'extrémité ouverte 133A du logement de réception 133 fait saillie depuis la surface extérieure de l'élément de raccord fluidique 13 au travers de l'extrémité ouverte 133A. Il est donc aisé de monter l'électrode 112 sur le porte-électrode 111 et de la remplacer au besoin.

Le corps 134 de l'élément de raccord fluidique 13 comprend en outre deux canalisations de raccordement fluidique, à savoir une canalisation d'entrée 131 de fluide caloporteur débouchant à une de ses extrémités dans le logement de réception 133, au niveau de la paroi de fond de ce dernier, et à son autre extrémité dans le trou de réception 137 vers l'extrémité ouverte de ce dernier.

Le corps 134 de l'élément de raccord fluidique 13 comprend également une canalisation de sortie 132 rectiligne de fluide caloporteur qui débouche à une de ses extrémités dans le logement de réception 133 au niveau de la paroi latérale de ce dernier et à son autre extrémité dans le trou de réception 137 vers l'extrémité ouverte de ce dernier.

La canalisation d'entrée 131 comprend une première portion rectiligne 131A s'étendant parallèlement à la canalisation de sortie 132, au sein du corps 134 de l'élément de raccord fluidique 13.

La première portion rectiligne 131A et la canalisation de sortie 132 s'étendent ici en oblique sur un côté du logement de réception 133 et au-dessus du trou de réception 137.

Cette première portion rectiligne 131A est prolongée par une deuxième portion rectiligne 131B s'étendant selon un angle de 45° dans l'exemple de réalisation illustré par rapport à la première portion rectiligne 131A, et située au-dessus et en amont du logement de réception 133.

L'embout 11B du bras de soudure supérieur 11 présente une cavité intérieure dans laquelle sont délimitées deux chambres 111B, 112B de passage de fluide caloporteur.

Une première chambre 111B située du côté de l'ouverture de la cavité intérieure est dimensionnée pour recevoir l'extrémité de la première partie 11A du bras supérieur 11. Un premier trou situé sur la surface extérieure de l'embout 11B est relié fluidiquement à la première chambre 111B par le biais d'un canal 113B s'étendant radialement dans l'embout 11B depuis la première chambre 111B.

Une deuxième chambre 112B située en aval de la première chambre 111B en partant de l'ouverture de la cavité intérieure est en communication fluidique avec la première chambre 111B. Un deuxième trou situé sur la surface extérieur de l'embout 11B est relié fluidiquement à la deuxième chambre 112B par un canal 114B s'étendant radialement dans l'embout 11B depuis la deuxième chambre 112B.

Comme décrit précédemment, la cavité intérieure de l'embout 11B comporte un alésage interne dans lequel est introduite l'extrémité du bras de soudure supérieur 11.

Dans un exemple de réalisation, l'alésage de l'embout 11B présente un filetage sur sa surface intérieure et l'extrémité de la première partie 11A présente un filetage sur sa surface extérieure. Les deux éléments 11A, 11B sont ainsi solidarisés l'un à l'autre de façon étanche par vissage.

La première partie 11A du bras supérieur 11 présente un conduit interne d'amenée 111A de fluide caloporteur relié en amont à la conduite d'alimentation A en fluide caloporteur et qui débouche dans la première chambre 111B de l'embout 11B une fois les deux éléments 11A, 11B assemblés entre eux.

Une canalisation ou conduite d'évacuation 112A de fluide caloporteur s'étend au sein du conduit interne d'amenée 111A et débouche par une extrémité biseautée dans la deuxième chambre 112B.

Le diamètre de cette canalisation d'évacuation 112A de fluide caloporteur est inférieur au diamètre intérieur du conduit interne d'amenée 112A et est dimensionné pour obturer de manière étanche le passage entre la première chambre 111B et la deuxième chambre 112B. Le conduit interne d'amenée 111A de fluide caloporteur entoure et est coaxial avec la canalisation d'évacuation 112A de fluide caloporteur.

Le circuit de refroidissement de la pince de soudure 1 qui est destiné à évacuer l'énergie thermique qui s'accumule dans l'électrode 112 durant les phases de soudure comprend donc un conduit interne d'amenée 111A dans laquelle le fluide est maintenu à une pression d'entrée sensiblement constante, et une canalisation d'évacuation 112A dudit fluide.

Le fluide caloporteur s'écoule ainsi dans le conduit interne d'amenée 111A autour de la canalisation d'évacuation 112A jusqu'à la première chambre 111B. Il transite ensuite dans le canal 113B radial jusqu'au premier trou qui communique avec la canalisation de raccordement d'entrée 131 de fluide caloporteur de l'élément de raccord fluidique 13. Il transite ainsi par les première et deuxième portions 131A, 131B de la canalisation de raccordement d'entrée 131, puis vers le chemin de passage interne du fluide caloporteur du porte-électrode 111.

Le fluide caloporteur de retour du chemin de passage interne du fluide caloporteur du porte-électrode 111 s'écoule depuis la canalisation de raccordement de sortie 132 de l'élément de raccord fluidique 13 dans la deuxième chambre 112B par le biais du deuxième trou et du deuxième canal 114B radial, puis s'introduit dans la canalisation d'évacuation 112A de fluide caloporteur.

On note que deux joints d'étanchéité 136 sont disposés chacun dans une gorge circulaire de la surface interne du trou de réception 137 et viennent au contact de la surface extérieure de la première partie 11A du bras de soudure supérieur 11.

On note en outre qu'un tuyau 135 d'amenée de fluide caloporteur est inséré dans l'extrémité de la deuxième portion 131B de la canalisation de raccordement d'entrée 131, cette extrémité étant située au fond du logement de réception 133 de l'élément de raccord fluidique 13.

Le tuyau 135, qui n'est pas visible sur la figure 5 mais sur les figures 2, 3, 6A, 6B, 7 et 8, s'étend dans le logement de réception 133, puis dans la cavité interne 1111 du porte-électrode 111 au travers de l'extrémité ouverte. Il débouche dans cet exemple à proximité du fond de la cavité interne 1111 du porte-électrode 111 pour amener le fluide caloporteur au plus près de l'électrode 112.

Le diamètre du tuyau 135 est dimensionné de sorte qu'un espace de passage de fluide caloporteur subsiste entre sa surface extérieure et la surface intérieure de la cavité interne 1111 du porte-électrode 111.

Le fluide caloporteur provenant de la canalisation de raccordement d'entrée 131 de l'élément de raccord fluidique 13 circule dans le tuyau 135 de haut en bas puis s'écoule dans l'espace de passage de la cavité interne 1111 du porte-électrode 111 de bas en haut jusqu'à ressortir à proximité du fond du logement de réception 133.

En s'écoulant dans le chemin de passage interne du porte-électrode 111, le fluide de refroidissement, caloporteur, passe contre la face arrière de l'électrode 112 qui obture la cavité interne 1111, de manière à évacuer l'énergie thermique qui s'accumule dans l'électrode 112 durant les phases de soudure.

On note qu'un autre joint d'étanchéité 136 est disposé dans une gorge circulaire de la surface interne du logement de réception 133 et vient au contact de la surface extérieure du porte-électrode 111.

Ainsi, une fois arrivé au niveau du fond du logement de réception 133 qui constitue un espace étanche, le fluide caloporteur s'introduit dans la canalisation de raccordement de sortie 132 de l'élément de raccord fluidique 13.

Les deux canalisations de raccordement fluidique, dites d'entrée et de sortie, de l'élément de raccord sont ainsi configurées pour raccorder le chemin de passage interne de fluide caloporteur du deuxième support d'électrode aux conduits d'amenée et d'évacuation de fluide caloporteur respectivement du bras de soudure supérieur quelle que soit la position du deuxième support d'électrode par rapport au bras de soudure supérieur 11.

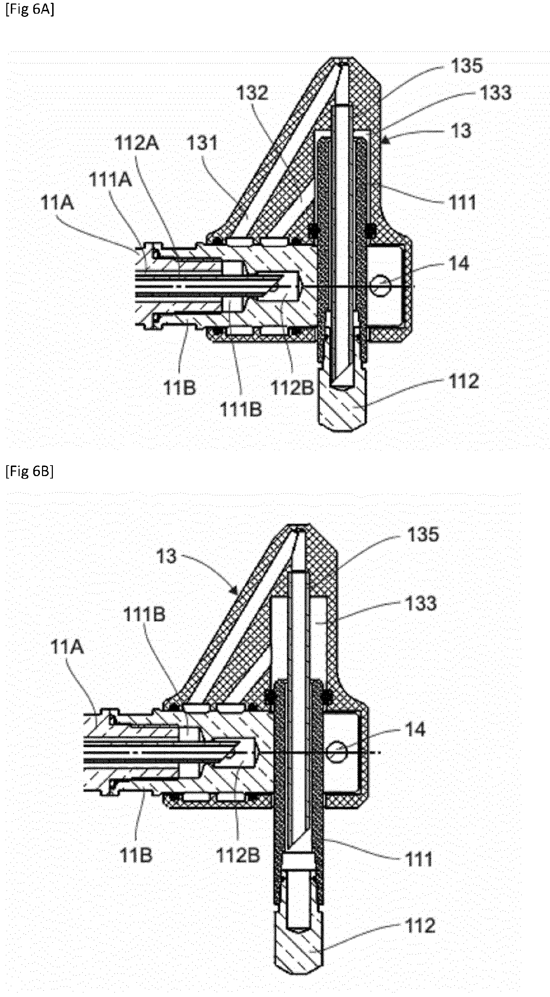

Les figure 6A et 6B illustrent deux positions possibles du porte-électrode 111 et de son électrode 112 sur le bras de soudure supérieur 11 dans lesquelles le fluide caloporteur est apte à circuler dans le circuit de refroidissement de la pince de soudure 1 via la chambre de passage 1111 interne de fluide caloporteur du porte-électrode 111.

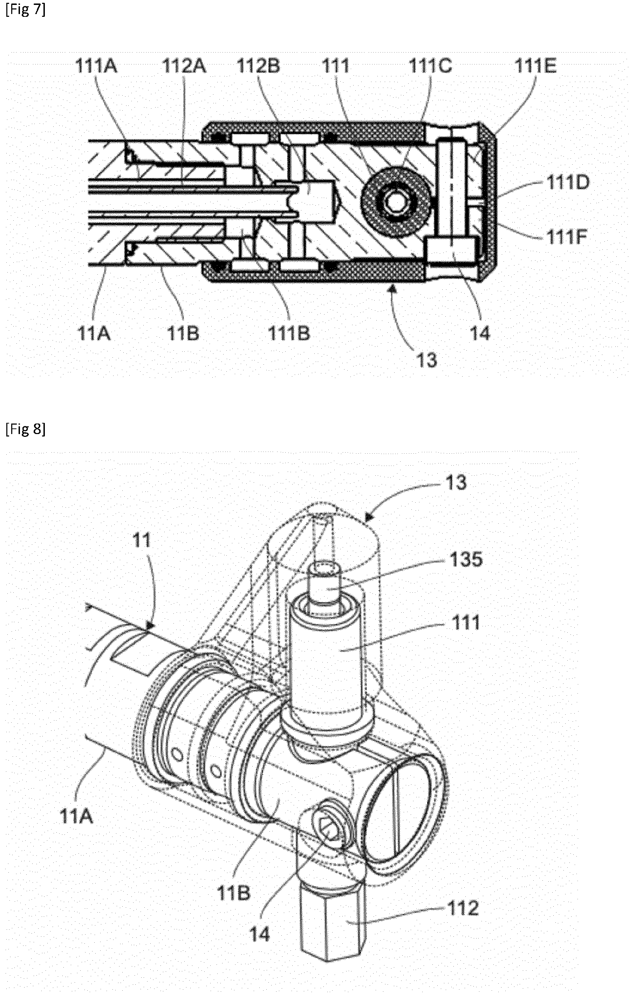

Comme visible sur la figure 7, l'embout 11B de forme cylindrique présente à son extrémité une ouverture en forme de fente 111D qui s'étend sur la totalité du diamètre de l'embout 11B.

Cette fente 111D s'étend au sein de l'embout 11B jusqu'à l'orifice traversant 111C dans lequel est destiné à être monté le porte-électrode 111. La fente 111D sépare l'extrémité de l'embout 11B en deux parties ou mâchoires 111E, 111F disposées en vis-à-vis.

Ces deux mâchoires 111E, 111F présentent chacune un alésage interne perpendiculaire à l'axe de la fente 111D dans lequel est disposé une vis de réglage 14 qui permet à l'utilisateur de rapprocher ou écarter ces deux mâchoires 111E, 111F l'une de l'autre, et donc de serrer plus ou moins le porte-électrode 111 dans l'orifice traversant 111C.

La vis de réglage 14 est accessible au niveau de la surface extérieure du raccord 13 rigide qui est disposé autour de l'embout 11B et qui comprend également un orifice de passage 133B de la vis de réglage 14. Lorsque la vis de réglage 14 est desserrée, les deux mâchoires 111E, 111F sont en configuration ouverte ce qui permet d'introduire le porte-électrode 111 dans l'orifice traversant 111C et d'ajuster sa position par rapport à l'embout 11B.

La vis de réglage 14 peut ensuite être serrée pour rapprocher les deux mâchoires 111E, 111F et maintenir le porte-électrode 111 dans la position choisie.

Il est donc aisé de régler la distance de l'électrode 112 par rapport à l'autre électrode 122, selon l'épaisseur des tôles à souder par exemple, et de maintenir fixe le porte-électrode 111 dans la position désirée.

De façon avantageuse, quelle que soit la position du support d'électrode 111 par rapport au bras de soudure supérieur 11, le fluide caloporteur est dirigé vers l'électrode 112 pour évacuer l'énergie thermique qui s'accumule dans l'électrode 112 durant les phases de soudure.

On note à ce titre qu'il subsiste un espace entre le fond du logement de réception 133 et l'extrémité du porte-électrode 111 orientée vers ce fond. Ceci autorise un débattement du porte-électrode 111 au sein du logement de réception 133 lorsque la vis de réglage est actionnée.

La pince de soudure 1 dispose d'un moyen de génération de très forts courants électrique qui sont transmis à travers les deux électrodes serrant entre eux les matériaux à souder. Compte tenu de la plus grande résistance électrique des matériaux que celle des électrodes, le passage du courant vient chauffer les matériaux et le soudage s'effectue.

Par souci de clarté, les moyens de génération et les câbles électriques d'alimentation en courant ne sont pas représentés.

Les deux bras de soudure 11, 12 de la pince de soudure 1 sont isolés électriquement l'un de l'autre. Un actionneur (non représenté) est destiné à actionner les bras de la pince de soudure.

Dans des variantes de réalisation, un élément de raccord fluidique rigide peut alternativement ou également être mis en œuvre sur le bras de soudure inférieur, le premier support d'électrode comprenant un chemin de passage interne d'un fluide caloporteur similaire à celui décrit précédemment.

Bien entendu, il va de soi que l'invention ne se limite pas à l'exemple de réalisation plus spécialement décrit ci-dessus en référence aux dessins annexés ; elle en embrasse au contraire toutes les variantes.

## Revendications

1. Pince de soudure (1) par point comprenant un bras de soudure inférieur (12) portant un premier support d'électrode (121) et une première électrode (122), et un bras de soudure supérieur (11) portant un deuxième support d'électrode (111) et une deuxième électrode (112) pour effectuer un point de soudure entre une première pièce de tôle et une deuxième pièce de tôle par mise en contact de la première électrode (122) avec la première pièce de tôle et de la deuxième électrode (112) avec la deuxième pièce de tôle,
le deuxième support d'électrode (111) comprenant un chemin de passage interne d'un fluide caloporteur destiné à évacuer l'énergie thermique qui s'accumule dans la deuxième électrode (112) durant les phases de soudure, le bras de soudure supérieur (11) comprenant un conduit interne d'amenée (111A) de fluide caloporteur vers le chemin de passage interne de fluide du deuxième support d'électrode (111) et un conduit d'évacuation (112A) de fluide caloporteur provenant dudit chemin de passage interne de fluide caloporteur,
la pince de soudure (1) étant **caractérisée en ce que** le deuxième support d'électrode (111) est monté de façon réglable en hauteur sur le bras de soudure supérieur (11) de sorte à pouvoir régler la distance entre les deux électrodes (112, 122), et **en ce qu'**elle comprend un élément de raccord fluidique (13) rigide solidaire du bras de soudure supérieur (11), ledit élément de raccord (13) comprenant un corps (134) dans lequel sont ménagées deux canalisations de raccordement (131, 132) fluidique, dites d'entrée et de sortie, configurées pour raccorder le chemin de passage interne de fluide caloporteur dudit deuxième support d'électrode (111) aux conduits d'amenée et d'évacuation de fluide caloporteur respectivement du bras de soudure supérieur (11) quelle que soit la position de réglage en hauteur du deuxième support d'électrode (111) par rapport au bras de soudure supérieur (11).

2. Pince de soudure (1) selon la revendication 1, **caractérisée en ce que** le corps (134) de l'élément de raccord fluidique (13) comprend un logement de réception (133) dudit deuxième support d'électrode (111), ledit chemin de passage interne de fluide dudit deuxième support d'électrode (111) étant en communication fluidique avec ledit logement de réception (133), la canalisation de raccordement (131) fluidique dite d'entrée étant en communication fluidique avec le chemin de passage interne de fluide dudit deuxième support d'électrode (111) pour amener le fluide caloporteur vers la deuxième électrode (112) et la canalisation de raccordement (132) fluidique dite de sortie débouchant dans ledit logement de réception (133) pour évacuer le fluide caloporteur provenant du chemin de passage interne de fluide dudit deuxième support d'électrode (111).

3. Pince de soudure (1) selon la revendication 2, **caractérisée en ce que** le deuxième support d'électrode (111) comprend une cavité interne (1111) obturée à une première extrémité par ladite deuxième électrode (112) et ouverte à sa deuxième extrémité, la canalisation de raccordement (131) dite d'entrée étant relié à un tuyau (135) d'amenée de fluide caloporteur qui s'étend en partie dans la cavité interne (1111) par la deuxième extrémité ouverte et y débouche pour amener le fluide caloporteur vers la deuxième électrode (112).

4. Pince de soudure (1) selon la revendication 3, **caractérisée en ce que** le tuyau (135) est dimensionné pour que le fluide caloporteur issu du tuyau et déversé dans cavité interne (1111) transite ensuite dans l'espace défini entre la paroi intérieure de la cavité interne (1111) et la paroi extérieure du tuyau (135) vers ledit logement de réception (133).

5. Pince de soudure (1) selon l'une des revendications 2 à 4, **caractérisée en ce que** le corps (134) de l'élément de raccord fluidique (13) comprend un trou de réception (137) de l'extrémité du bras supérieur (11) s'étendant perpendiculairement audit logement de réception (133) dudit deuxième support d'électrode (111).

6. Pince de soudure (1) selon la revendication 5, **caractérisée en ce que** les conduits d'amenée et d'évacuation (111A, 112A) de fluide caloporteur du bras supérieur (11) sont mis en communication avec les deux canalisations de raccordement (131, 132) fluidique, dites d'entrée et de sortie, de l'élément de raccord fluidique (13) au sein du trou de réception (137).

7. Pince de soudure (1) selon l'une des revendications précédentes, **caractérisée en ce que** le bras supérieur (11) comprend deux mâchoires de serrage du deuxième support d'électrode (111) sur le bras supérieur (11) et des moyens de réglage des mâchoires entre une position écartée autorisant le positionnement du deuxième support d'électrode (111) par rapport au bras de soudure supérieur (11) et une position rapprochée bloquant en position le deuxième support d'électrode (111) par rapport au bras de soudure supérieur (11).

8. Pince de soudure (1) selon la revendication précédente, **caractérisée en ce que** les moyens de réglage comprennent une vis de réglage coopérant avec les deux mâchoires de sorte à rapprocher ou écarter ces deux mâchoires l'une de l'autre.

9. Pince de soudure (1) selon l'une des revendications précédentes, **caractérisée en ce que** le corps (134) de l'élément de raccord fluidique (13) est en matière plastique.
